# FASCICULE DE BREVET EUROPEEN

(11) **EP 1 924 961 B1**
(45) Date de publication et mention de la délivrance du brevet: **22.07.2009**
(21) Numéro de dépôt: 06792953.9
(22) Date de dépôt: 23.08.2006
(51) Int. Cl.: G06K 19/077

(54) **DOCUMENT D'IDENTITE ET DE SECURITE QUI CONSISTE EN UNE ETIQUETTE ADHESIVE**
AUS EINEM AUFKLEBER BESTEHENDES IDENTITÄTS- UND SICHERHEITSDOKUMENT
IDENTITY AND SECURITY DOCUMENT CONSISTING IN AN ADHESIVE LABEL

(30) Priorité: 31.08.2005 FR 0508892
(43) Date de publication de la demande: 28.05.2008
(73) Titulaire: OBERTHUR TECHNOLOGIES, 75017 Paris (FR)
(72) Inventeur: DEMAIMAY, Florian, F-35000 Rennes (FR); BORDE, Xavier, F-35410 Osse (FR); LIEBER, Sophie, F-35000 Rennes (FR)
(74) Mandataire: Branger, Jean-Yves
(86) Numéro de dépôt international: PCT/EP2006/065571
(87) Numéro de publication internationale: WO 2007/025913

(56) Documents cités:
- WO-A-00/73990
- US-A- 5 902 437
- US-A1- 2003 031 819
- US-A1- 2004 036 608

## Description

La présente invention se rapporte à un document d'identité et de sécurité qui consiste en une étiquette adhésive.

Un tel document peut notamment consister en un visa.

Les documents d'identité et plus particulièrement les passeports, les cartes d'identité, les visas, etc. font régulièrement l'objet de tentatives de falsification et de contrefaçon.

Les institutions qui émettent ces documents sont très vigilantes et mettent en oeuvre régulièrement des améliorations visant à toujours plus les sécuriser.

La multiplication d'événements terroristes ces dernières années a mis l'accent sur les conséquences de l'usurpation d'identité.

C'est dans ce contexte qu'on a commencé à associer une ou plusieurs données biométriques relatives au titulaire d'un document d'identité, à ce document lui-même.

C'est ainsi qu'ont été développés les premiers passeports intégrant des données biométriques, stockées dans un circuit intégré du type puce sans contact.

Cette technologie d'identification par radiofréquence (RFID) a l'avantage de rendre possible l'intégration de la biométrie dans les documents de voyage, en en permettant la lecture par les autorités compétentes de différents pays.

Par ailleurs, la fraude de tels documents est rendue encore plus complexe par l'apport de l'électronique.

Par contre, l'intégration de l'électronique dans un document d'identité et de sécurité qui consiste en une étiquette adhésive est encore peu développée.

Lorsque cette étiquette consiste en un visa, l'incorporation de données biométriques permet non seulement de le sécuriser, mais autorise aussi une lecture très rapide des données qui y sont contenues, ce qui peut s'avérer utile, par exemple, en période d'afflux à une frontière.

La fabrication d'étiquettes "RFID" est aujourd'hui maîtrisée et répandue pour des objets à faible valeur ajoutée, produits en grand volume et dont la durabilité et la sécurisation sont très faibles, voir inexistantes.

Des applications principales sont les étiquettes de traçabilité des biens de consommation ou la billetterie d'événements culturels ou sportifs, par exemple.

Les procédés développés et mis en oeuvre pour la fabrication de telles étiquettes ne sauraient être utilisés pour des articles devant être sécurisés. En effet, ces procédés sont essentiellement orientés vers les gains de productivité, pour assurer des vitesses de production élevées et des volumes importants.

Les problématiques de sécurité ne sont pas donc prises en compte. Or, pour une application de haute sécurité, on doit assurer l'inviolabilité de l'étiquette RFID, afin d'interdire son prélèvement et sa réutilisation, même partielle. L'impression ultérieure des mentions variables caractéristiques du porteur (dite "étape de personnalisation") de l'étiquette doit également être facile et sécuritaire. Enfin, sa durabilité doit être en adéquation avec la validité du document.

On décrit dans le document US-A-2002/0129488 une étiquette adhésive portant un équipement RFID. Au moins l'une des faces de cette étiquette porte une antenne connectée à une puce sans contact. Dans un mode de réalisation particulier, chaque face porte une antenne et sa puce associée.

Des éléments de sécurité du type hologramme peuvent être portés par l'étiquette. Dans cette hypothèse, ils sont appliqués sur l'antenne.

Quand l'étiquette porte une seule antenne, l'adhésif est appliqué sur la face qui en est dépourvue.

Dans ce document, il est envisagé une application à titre d'étiquette de sécurité, notamment pour apposition sur un passeport.

Une telle étiquette présente un certain nombre d'inconvénients.

Pour rendre le plus difficile possible le décollement d'une telle étiquette de son support, en particulier pour une utilisation ultérieure frauduleuse, il est important que son épaisseur soit la plus réduite possible.

Or, la présence d'une antenne sur la face recto de l'étiquette et, dans certains cas, également sur la face verso, nécessite que l'opacité de l'étiquette soit importante. Cette opacité peut être obtenue en augmentant l'épaisseur.

Dans le cas contraire, la ou les antennes sont visibles au travers de l'étiquette, ce qui est gênant pour la lecture ou l'identification des inscriptions ou éléments de sécurité portés par sa face recto.

Et si, pour remédier à ces inconvénients, on utilise une étiquette de forte épaisseur, on perd alors en souplesse et on augmente les chances de voir des fraudeurs procéder avec succès à une "délamination" de l'étiquette, en vue d'une utilisation frauduleuse ultérieure.

Par ailleurs, la présence d'une puce sur la face recto de l'étiquette, directement accessible, facilite les tentatives d'extraction de celle-ci et de modification des données biométriques qu'elle contient.

La présente invention vise donc à remédier à tous ces inconvénients en proposant un document d'identité et de sécurité qui, de manière connue, consiste en une étiquette adhésive comprenant une feuille, dite "première feuille", dont la face recto porte au moins des caractéristiques notamment imprimées liées à l'identité de son titulaire.

Selon l'invention, ce document se caractérise essentiellement par le fait :
- qu'il comprend une feuille additionnelle, dite "seconde feuille", dont la face verso porte une antenne, tandis que sa face recto porte un circuit intégré du type puce électronique sans contact reliée à des plages de connexion à la dite antenne, qui s'y raccordent au travers de ladite seconde feuille ;
- que la face verso de ladite première feuille est fixée à la face recto de la seconde feuille, emprisonnant ainsi entre elles ladite puce ;
- et que la face verso de la seconde feuille est revêtue d'un adhésif qui assure un collage irréversible et qui recouvre au moins en partie ladite antenne.

Du fait que la puce est emprisonnée entre les deux feuilles, elle n'est pas directement visible de l'extérieur, ce qui réduit les tentatives d'extraction et de lecture des données qu'elle contient.

De plus, le fait qu'elle soit ainsi prise en "sandwich" complique encore plus les opérations des fraudeurs.

L'antenne se trouvant portée par la face verso de la deuxième feuille, elle n'est pas détectable visuellement quand l'étiquette est vue de dessus, c'est à dire par la face recto de la première feuille. Cela permet donc de réduire l'épaisseur de l'étiquette.

L'antenne étant au moins partiellement revêtue d'adhésif, si un fraudeur essaie de décoller l'étiquette du support sur lequel elle a été fixée, au moins une partie de cette adhésif va rester adhérer sur le support en décollant au moins partiellement l'antenne. L'étiquette ainsi extraite ne pourra donc pas être réutilisée car son antenne aura perdu son intégrité.

Lorsque l'étiquette consiste en un visa, elle vient alors renforcer le niveau de sécurisation du passeport sur lequel elle est collée.

Par ailleurs, selon d'autres caractéristiques avantageuses et non limitatives de ce document :
- lesdites feuilles contiennent, en partie ou en totalité, du papier ;
- lesdites feuilles contiennent, en partie ou en totalité, au moins un matériau synthétique ;
- lesdites feuilles sont souples ;
- ladite première feuille comporte au moins une ligne de fragilisation qui sépare ladite feuille en au moins deux parties, de sorte que toute tentative visant à la délaminer se solde par sa séparation en lesdites parties ;
- ladite seconde feuille comporte au moins une ligne de fragilisation qui sépare ladite feuille en au moins deux parties, de sorte que toute tentative visant à la délaminer se solde par sa séparation en lesdites parties ;
- ladite ligne de fragilisation consiste en une alternance de secteurs prédécoupés et non découpés ;
- ladite antenne est imprimée sur ladite seconde feuille ;
- la face recto de ladite première feuille porte au moins un élément de sécurité tel qu'une impression en taille douce, un timbre sec, un hologramme ;
- ledit élément de sécurité se situe à la verticale de ladite puce, de sorte qu'il masque celle-ci visuellement et, éventuellement, tactilement ;
- la fixation des deux feuilles entre elles est réalisée par collage, lamination ou fusion ;
- il comporte une feuille supplémentaire détachable en contact avec l'adhésif.

D'autres caractéristiques et avantages de l'invention apparaîtront à la lecture de la description détaillée qui va suivre de certains modes de réalisation. Cette description, donnée à titre non limitatif, sera faite en référence aux figures annexées dans lesquels :
- la figure 1 est une vue de dessus d'un passeport en position ouverte, une de ses pages portant un visa qui constitue un document de sécurité conforme à l'invention ;
- la figure 2 une vue de côté du document représenté à la figure 1, les épaisseurs des différentes couches qui le constituent ayant été exagérées dans un seul but de clarté ;
- la figure 3 est une vue de dessus de la face recto de la seconde feuille dudit document, qui montre également par transparence ce que porte la face verso ;
- la figure 4 est une vue analogue à la figure 3, mais montrant seulement ce que porte la face recto ;
- la figure 5 est une vue partielle, en coupe, de la seconde feuille, dans la zone de raccordement de l'antenne à la puce sans contact ;
- la figure 6 montre en perspective un passeport en position semi-ouverte, ainsi qu'un document conforme à l'invention, sous forme éclatée.

L'étiquette selon l'invention est essentiellement constituée d'une première feuille 3, ou feuille supérieure, et d'une seconde feuille 4 ou feuille inférieure.

La première feuille est de préférence formée exclusivement de papier, ou contient du papier.

Elle peut être mono- ou multicouches. Elle est de préférence souple, mais non de manière obligatoire.

L'épaisseur de cette feuille peut éventuellement intégrer un ou plusieurs éléments de sécurité de type connu. Il s'agit par exemple de l'absence d'azurant optique, la présence d'un filigrane, d'un fil de sécurité, de fibres de sécurité, de planchettes, etc.

D'autres types de matériaux constitutifs de la première feuille peuvent être choisis. Ils peuvent être constitués en partie ou en totalité de fibres synthétiques telles que des fibres de polyéthylène, polypropylène, polyamide, polyester, etc.

Ainsi, des matériaux connus sous les marques Teslin et Neobond peuvent être utilisés. Teslin, de la société PPG Industries Inc., est un support synthétique à base de polyéthylène, de nature microporeuse. Neobond, de la société Papierfabrick Lahnstein GmbH, est un mélange de fibres cellulosiques et de fibres textiles (polyamide et polyester).

Cette feuille peut être traitée pour faciliter et sécuriser l'étape ultérieure de personnalisation de l'étiquette, réalisée habituellement par l'une ou l'autre des techniques suivantes : impression par jet d'encre, impression laser, transfert thermique, thermo sublimation.

Elle peut également être "pré-adhésivée" si, comme on le verra plus loin dans la description, sa fixation à la seconde feuille se fait par collage.

Dans la mesure du possible, on choisira une feuille d'épaisseur très réduite, ceci afin d'améliorer la sécurité de l'ensemble de l'étiquette.

Elle pourra être comprise entre 50 et 100 micromètres, de préférence 70 micromètres.

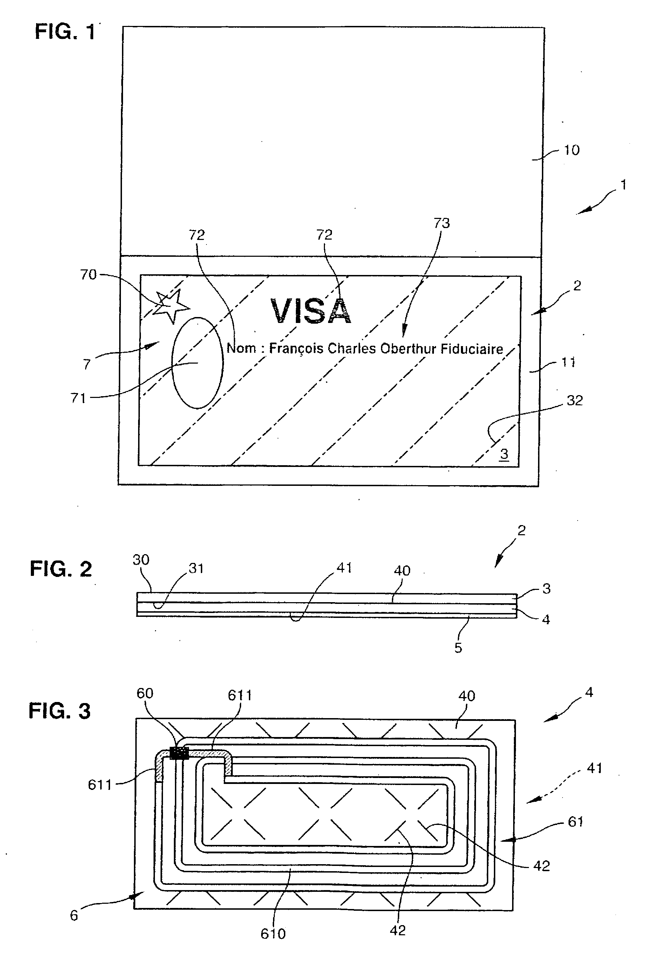

Sur les figures annexées, les face recto et verso, ce qui correspond aux faces supérieure et inférieure dans la position de la figure 1, sont respectivement référencées 30 et 31.

La face recto 30 porte des mentions pré-imprimées "VISA" et "NOM" portant la référence 72, ce qui signifie qu'elles sont appliquées sur cette face, dès la fabrication du document, préférentiellement par impression. Il peut s'agir d'une impression en taille douce.

Elle porte aussi des mentions 73, qui sont propres au porteur du document 1 et qui sont mises en place après la fabrication du document, lorsque celui-ci est alloué au dit porteur. Dans le cas représenté ici, ces mentions consistent en "François Charles Oberthur Fiduciaire".

Bien entendu, la réalisation de ces impressions peut être faite en utilisant les moyens de sécurisation bien connus à ce jour.

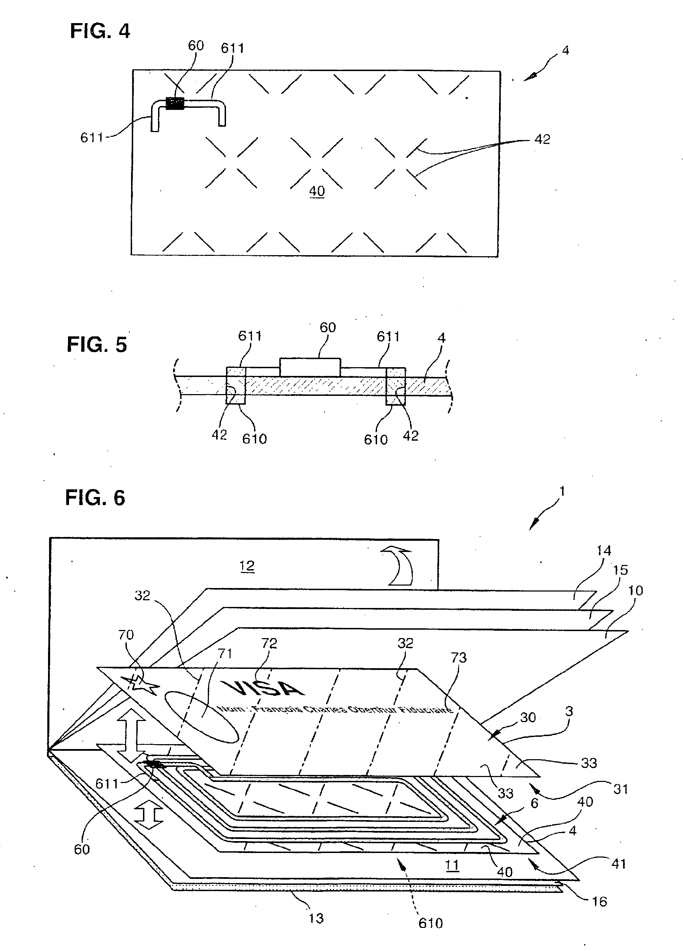

Ainsi que cela est visible aux figures 1 et 6, la première feuille comporte une série de lignes parallèles de fragilisation 32. Dans ce mode de réalisation, ces lignes consistent en une alternance de secteurs prédécoupés et non découpés. Elles séparent la feuille en autant de parties 33 en forme de bandeaux. On expliquera plus loin l'intérêt de telles lignes de fragilisation.

Des éléments de sécurité 7 sont par ailleurs portés par la feuille 3. En l'occurrence, ils consistent ici en un espace 71 de forme oblongue, réservé à la mise en place d'une photographie et en une impression en taille-douce en forme d'étoile 70.

Bien entendu, on peut aussi avoir recours à d'autres éléments de sécurité réalisés par exemple par impression de type offset, sérigraphie ou typographie. N'importe quelle forme peut leur être donnée.

On peut également faire usage d'un hologramme ou d'un motif réalisé à l'aide d'une encre optiquement variable.

La feuille peut, bien entendu, porter plusieurs de ces éléments de sécurité.

La seconde feuille 4, dont les faces recto et verso sont référencées 40 et 41, est également de préférence formée exclusivement de papier, ou contient du papier. De même que pour la première feuille, elle peut être constituée en partie ou en totalité de fibres synthétiques. Peuvent y être intégrés tout ou partie des éléments cités plus haut, en référence à la première feuille (absence d'azurant optique, présence d'un filigrane, d'un fil de sécurité, de fibres de sécurité, de planchettes, etc.).

Dans la mesure du possible et comme pour la première feuille, on choisira une feuille d'épaisseur très réduite, ceci afin d'améliorer la sécurité de l'ensemble de l'étiquette.

Elle pourra être comprise entre 50 et 200 micromètres, de préférence 100 micromètres. De préférence, elle sera plus épaisse que la première feuille, du fait qu'elle sert de supports à des équipements décrits ci-après, dont la durée de vie dépend notamment des propriétés mécaniques du support.

Comme la première feuille, la seconde 4 comporte une série de lignes de fragilisation 42. Dans ce mode de réalisation, ces lignes consistent en une alternance de secteurs prédécoupés constituant des motifs en forme de croix, et de secteurs non découpés.

Conformément à l'invention, cette seconde feuille porte un transpondeur RFID 6.

Plus précisément, sa face verso 41 porte une antenne 61, tandis que sa face recto 40 porte un circuit intégré consistant ici en une puce électronique sans contact 60 reliée à des plages de connexion 611 à la dite antenne, qui s'y raccordent au travers de ladite feuille.

Dans l'ensemble de la présente demande, y compris les revendications, on utilisera indifféremment les dénominations "circuit intégré" et "puce sans contact" pour désigner le même équipement.

A la figure 3 notamment est visible par transparence ladite antenne 61, dont les spires concentriques sont référencées 610.

Pour sa fabrication, on utilise de préférence la technique de l'impression sérigraphique, en utilisant une encre conductrice, par exemple à base d'argent ou de polymères conducteurs organiques.

D'autres techniques usuelles pour la fabrication d'antennes peuvent être utilisées. A titre non limitatif, on peut citer la technique du cuivre gravé ou celle du dépôt additif de cuivre.

Les avantages de l'impression sérigraphique sur les techniques citées ci-dessus sont de permettre une impression directe sur un support à base de papier, en tirant partie de ses caractéristiques di-électriques, d'obtenir une bonne accroche de l'encre sur ce support rugueux et poreux, de limiter les étapes pour la fabrication de l'antenne. Enfin, cela permet de faciliter la mise en oeuvre de la technique dite "double face", qui sera décrite ci-après.

Cette technique "double face" est bien connue dans le domaine de la fabrication des circuits imprimés. Elle permet de tirer partie des deux faces d'un même support pour augmenter la densité d'un circuit et faciliter les connexions entre les différentes couches de ce circuit. Elle est utilisée pour la fabrication de circuit rigide.

La connexion entre les deux faces du support est réalisée, soit par la technique du "trou métallisé", soit par la technique du "via argent".

Comme précisé plus haut, la face recto 40 de la feuille 4 porte un circuit intégré consistant ici en une puce électronique sans contact 60 reliée à des plages de connexion 611 à la dite antenne.

Après impression de l'antenne 61 et séchage de celle-ci, on met en oeuvre la technique du "via argent". Pour ce faire, on procède au perçage de la feuille à l'aplomb des deux extrémités libres des spires 610. Ce perçage est par exemple réalisé en utilisant un foret de très petit diamètre, entraîné en rotation sur lui-même à très grande vitesse.

Les trous correspondants ont été référencés 42 à la figure 5.

Après avoir retourné la feuille, on procède alors au bouchage des trous 42 et à l'impression des plages de connexion 611 de la puce 60, par exemple avec de la pâte d'argent, de préférence en une seule et même opération. L'avantage de cette technique est que la pâte d'argent est suffisamment liquide pour couler naturellement dans les trous 42 et les remplir.

On procède alors à la fixation et à la connexion de la puce 60

Un encapsulant vient éventuellement la protéger.

La face verso 41 de la seconde feuille 4, c'est à dire celle qui est déjà pourvue de l'antenne 61, est revêtue d'un adhésif 5 qui assure un collage irréversible et qui recouvre au moins en partie ladite antenne 61.

A titre indicatif, un exemple d'un tel adhésif est à base acrylique, tel que celui commercialisé par la société TESA sous la référence 4959.

Enfin, selon une caractéristique de l'invention, la face verso 31 de la première feuille 3 est fixée à la face recto 40 de la seconde feuille 4, emprisonnant ainsi la puce 60.

Lorsque la première feuille est préencollée, cette fixation se fait bien entendu par collage. Toutefois, toute autre technique de fixation, telle que la lamination ou la fusion, peut être mise en oeuvre.

Comme précisé plus haut, des éléments de sécurité 7 sont portés par la feuille 3. Dans l'exemple présenté ici, ils consistent ici en un espace réservé 71 de forme oblongue et en une impression en taille-douce en forme d'étoile 70.

Avantageusement, on s'arrange pour que l'un d'entre eux se situe à la verticale de la puce 60, de manière à la masquer.

Dans la forme de représentée ici, c'est l'étoile qui masque la puce. Dans la mesure où il s'agit d'une impression en taille-douce, la cavité qu'elle génère du coté de la face verso 31 de la feuille 3 sert de logement à la puce.

Ainsi, cette puce est masquée visuellement, mais aussi tactilement. Elle est donc indétectable.

Contre l'adhésif peut être appliquée une feuille supplémentaire détachable, non représentée sur les figures. Elle sert de support d'attente à l'étiquette et en est séparée en vue de sa mise en place définitive sur un document tel qu'un passeport.

De préférence, le procédé de fabrication est réalisé en mettant en oeuvre successivement au moins les étapes suivantes :
- sur ladite première feuille, préférentiellement à base de papier, pré impression des caractéristiques communes à toutes les étiquettes, avec intégration de l'ensemble des éléments de sécurité graphique ;
- sur ladite deuxième feuille, préférentiellement à base de papier, réalisation de l'antenne RFID ;
- transfert d'adhésif sur la seconde feuille, à savoir sur la face qui comporte les spires de l'antenne ;
- dépôt de la puce sur la partie terminale de l'antenne ;
- liaison des deux feuilles.

L'étiquette selon l'invention est représentée aux figures 1 et 6 en place sur un passeport 1, et plus précisément sur une page 11 du passeport, réservée à cet effet.

Ses pages de couverture sont référencées 12 et 13, tandis que les autres pages qui le composent portent les références 10 et 14 à 16.

La présence des lignes de fragilisation 32 sur la feuille 3 rend impossible toute tentative de délamination de l'étiquette, pour pouvoir récupérer cette feuille et la réutiliser de manière frauduleuse. En effet, en procédant ainsi, les lignes 32 viennent à rompre, de sorte que la feuille 3 qui, jusqu'ici, avait un caractère unitaire, perd son intégrité et est séparée en autant de parties distinctes 33 en forme de bandes. Cela est d'autant plus efficace que l'épaisseur de la feuille 3 est réduite.

De même, toute tentative de récupération de la feuille 4 est rendue impossible par la présence des lignes de fragilisation 42. Comme montré sur les figures, ces lignes constituent des motifs en forme de croix, placés au centre de l'antenne, qui se prolongent à la périphérie de celle-ci.

Les lignes de fragilisation des deux feuilles peuvent être réalisées en une seule opération, avantageusement après leur assemblage.

En résumé, l'étiquette de l'invention présente les avantages suivants :

Sa sécurité est améliorée en cas de tentative de décollement de celle-ci, en entraînant la destruction du système RFID. Ceci est rendu possible par le positionnement des spires de l'antenne, directement en contact avec l'adhésif et avec la seconde feuille. Toute tentative de décollement va en effet se solder par le fait qu'au moins une partie de l'antenne va se détacher de la feuille et rester fixée à l'adhésif. Cela est d'autant plus efficace que l'encre conductrice utilisée pour l'impression des spires présente une faible adhésion à la feuille, tout en étant suffisamment durable (en flexion notamment). Cela peut être obtenu par impression préalable d'un vernis sous-couche adapté, sur la feuille, avant impression des spires de l'antenne. Par ailleurs, les lignes de fragilisation 42 "sécurisent" l'antenne. En effet, toute tentative de délamination se solde par la coupure de l'antenne en plusieurs zones.

La puce est emprisonnée entre les deux feuilles. Ainsi "encapsulée", la puce est mieux protégée des contraintes extérieures. Toute tentative de récupération de la puce demande une délamination interne, ce qui entraîne la destruction de l'étiquette.

Les spires de l'antenne sont éloignées de la face supérieure de l'étiquette. Grâce à cela, la lisibilité de cette face est accrue. Ceci permet d'utiliser des supports pour ladite face graphique plus fins et donc plus sécuritaires.

On évite par ailleurs la réalisation d'un pont isolant associé à l'antenne en tirant partie du caractère diélectrique de la seconde feuille.

Plusieurs solutions ont déjà été proposées pour éviter la réalisation d'un pont isolant, pour permett re le rapprochement des parties terminales de l'antenne et sa connexion à la puce. Ainsi, on a proposé l'utilisation d'un "interposeur". Il s'agit d'un boîtier particulier recevant la puce, qui présente deux extrémités rallongées pour la connexion aux parties terminales de l'antenne. Le support de ce boîtier doit être isolé pour pouvoir reposer directement sur les spires de l'antenne, sans risque de court-circuit. Cette technique et toutes celles qui s'en rapprochent présente des inconvénients de moindre sécurité et de moindre durabilité par rapport à un montage traditionnel.

Ce type de boîtier "interposeur" génère en effet une zone plus rigide dans le montage, nuisible face aux contraintes de flexion. Ce boîtier est aisément récupérable par un fraudeur et peut être très facilement reconnecté.

Grâce à la technique "double face" mise en oeuvre selon l'invention, la connexion de la puce ne nécessite pas de boîtier spécifique.

## Revendications

1. Document d'identité et de sécurité qui consiste en une étiquette adhésive (2) comprenant une feuille (3), dite "première feuille", dont la face recto (30) porte au moins des caractéristiques (73), notamment imprimées , liées à l'identité de son titulaire, **caractérisé par le fait :**
- **qu'**il comprend une feuille additionnelle (4), dite "seconde feuille", dont la face verso (41) porte une antenne (61), tandis que sa face recto (40) porte un circuit intégré du type puce électronique sans contact (60) reliée à des plages de connexion (611) à la dite antenne (61), qui s'y raccordent au travers de ladite seconde feuille (4);
- **que** la face verso (31) de ladite première feuille (3) est fixée à la face recto (40) de la seconde feuille (4), emprisonnant ainsi entre elles ladite puce (60) ;
- et **que** la face verso (41) de la seconde feuille (4) est revêtue d'un adhésif (5) qui assure un collage irréversible et qui recouvre au moins en partie ladite antenne (61).

2. Document selon la revendication 1, **caractérisé par le fait que** lesdites feuilles contiennent, en partie ou en totalité, du papier.

3. Document selon la revendication 1, **caractérisé par le fait que** lesdites feuilles contiennent, en partie ou en totalité, au moins un matériau synthétique.

4. Document selon l'une des revendications 1 à 3, **caractérisé par le fait que** lesdites feuilles (3 ; 4) sont souples.

5. Document selon l'une des revendications précédentes, **caractérisé par le fait que** ladite première feuille (3) comporte au moins une ligne de fragilisation (32) qui sépare ladite feuille en au moins deux parties (33), de sorte que toute tentative visant à la délaminer se solde par sa séparation en lesdites parties (33).

6. Document selon l'une des revendications précédentes, **caractérisé par le fait que** ladite seconde feuille (4) comporte au moins une ligne de fragilisation (42) qui sépare ladite feuille en au moins deux parties, de sorte que toute tentative visant à la délaminer se solde par sa séparation en lesdites parties.

7. Document selon l'une des revendications 5 ou 6, **caractérisé par le fait que** ladite ligne de fragilisation (32;42) consiste en une alternance de secteurs prédécoupés et non découpés.

8. Document selon l'une des revendications précédentes, **caractérisé par le fait que** ladite antenne (61) est imprimée sur ladite seconde feuille (4).

9. Document selon l'une des revendications précédentes, **caractérisé par le fait que** la face recto (30) de ladite première feuille (3) porte au moins un élément de sécurité tel qu'une impression en taille douce, un timbre sec, un hologramme (70).

10. Document selon la revendication 9, **caractérisé par le fait que** ledit élément de sécurité (70) se situe à la verticale de ladite puce (60), de sorte qu'il masque celle-ci visuellement et, éventuellement, tactilement.

11. Document selon l'une des revendications précédentes, **caractérisé par le fait que** la fixation des deux feuilles (3, 4) entre elles est réalisée par collage, lamination ou fusion.

12. Document selon l'une des revendications précédentes, **caractérisé par le fait qu'**il comporte une feuille supplémentaire détachable en contact avec l'adhésif.

## Claims

1. Identity and security document consisting of an adhesive label (2) comprising a sheet (3) called a "first sheet" whose recto side (30) carries at least characteristics (73), notably printed characteristics, related to the identity of its holder, **characterized by** the fact that:
- it comprises an additional sheet (4) so-called "second sheet" whose verso side (41) carries an antenna (61) whilst its recto side (40) carries an integrated circuit of contactless electronic chip type (60) linked to connection areas (611) to said antenna (61), which connect thereto through said second sheet (4);
- the verso side (31) of said first sheet (3) is attached to the recto side (40) of the second sheet (4) thereby trapping said chip (60) therebetween;
- the verso side (41) of the second sheet (4) is coated with an adhesive (5) which ensures irreversible bonding and which covers said antenna (61) at least in part.

2. Document according to claim 1, **characterized by** the fact that said sheets fully or partly contain paper.

3. Document according to claim 1, **characterized by** the fact that said sheets, in full or in part, contain at least one synthetic material.

4. Document according to any of claims 1 to 3, **characterized by** the fact that said sheets (3; 4) are flexible.

5. Document according to any of the preceding claims, **characterized by** the fact that said first sheet (3) comprises at least one score line (32) which separates said sheet into at least two parts (33), so that any attempt to delaminate the sheet causes its separation into said parts (33).

6. Document according to any of the preceding claims, **characterized by** the fact that said second sheet (4) comprises at least one score line (42) which separates said sheet into at least two parts, so that any attempt to delaminate the sheet causes its separation into said parts.

7. Document according to either of claims 5 or 6, **characterized by** the fact that said score line (32; 42) consists of alternate pre-cut and non-cut sections.

8. Document according to any of the preceding claims, **characterized by** the fact that said antenna (61) is printed onto said second sheet (4).

9. Document according to any of the preceding claims, **characterized by** the fact that the recto side (30) of said first sheet (3) carries at least one security element such as intaglio print, embossed stamp, hologram (70).

10. Document according to claim 9, **characterized by** the fact that said security element (70) is located over said chip (60) so that it masks this chip visually and possibly tactilely.

11. Document according to any of the preceding claims, **characterized by** the fact that the attaching of the two sheets (3, 4) together is obtained by adhesion, lamination or fusion.

12. Document according to any of the preceding claims, **characterized by** the fact that it comprises a detachable, additional sheet in contact with the adhesive.

## Patentansprüche

1. Identitäts- und Sicherheitsdokument, das aus einem Aufkleber (2) besteht, der ein Blatt (3), genannt "erstes Blatt", umfasst, dessen Vorderseite (30) wenigstens Merkmale (73) trägt, die insbesondere aufgedruckt sind, die mit der Identität seines Inhabers verbunden sind, **dadurch gekennzeichnet:**
- **dass** es ein zusätzliches Blatt (4), genannt "zweites Blatt", umfasst, dessen Rückseite (41) eine Antenne (61) trägt, während seine Vorderseite (40) einen integrierten Schaltkreis vom Typ kontaktloser Chip (60) trägt, der an Verbindungsbereichen (611) mit der Antenne (61) verbunden ist, die dort durch das zweite Blatt (4) angeschlossen sind;
- **dass** die Rückseite (31) des ersten Blatts (3) an der Vorderseite (40) des zweiten Blatts (4) befestigt ist, wobei sie somit zwischen sich den Chip (60) einschließen;
- und **dass** die Vorderseite (41) des zweiten Blatts (4) mit einem Kleber (5) beschichtet ist, der ein irreversibles Kleben gewährleistet und der wenigstens teilweise die Antenne (61) bedeckt.

2. Dokument gemäß Anspruch 1, **dadurch gekennzeichnet, dass** die Blätter teilweise oder vollständig Papier enthalten.

3. Dokument gemäß Anspruch 1, **dadurch gekennzeichnet, dass** die Blätter teilweise oder vollständig ein synthetisches Material enthalten.

4. Dokument gemäß einem der Ansprüche 1 bis 3, **dadurch gekennzeichnet, dass** die Blätter (3 ; 4) nachgiebig sind.

5. Dokument gemäß einem der vorhergehenden Ansprüche, **dadurch gekennzeichnet, dass** das erste Blatt (3) wenigstens eine Bruchlinie (32) umfasst, die das Blatt in wenigstens zwei Teile (33) teilt, damit jeglicher Versuch, der darauf abzielt, es zu delaminieren mit seiner Trennung in die Teile (33) endet.

6. Dokument gemäß einem der vorhergehenden Ansprüche, **dadurch gekennzeichnet, dass** das zweite Blatt (4) wenigstens eine Bruchlinie (42) umfasst, die das Blatt in wenigstens zwei Teile teilt, damit jeglicher Versuch, der darauf abzielt, es zu delaminieren mit seiner Trennung in die Teile endet.

7. Dokument gemäß einem der Ansprüche 5 oder 6, **dadurch gekennzeichnet, dass** die Bruchlinie (32;42) aus abwechselnd vorgestanzten und nicht gestanzten Sektoren besteht.

8. Dokument gemäß einem der vorhergehenden Ansprüche, **dadurch gekennzeichnet, dass** die Antenne (61) auf das zweite Blatt (4) gedruckt ist.

9. Dokument gemäß einem der vorhergehenden Ansprüche, **dadurch gekennzeichnet, dass** die Vorderseite (30) des ersten Blatts (3) wenigstens ein Sicherheitselement wie beispielsweise einen Kupferdruck, einen Trockenstempel, ein Hologramm (70) trägt.

10. Dokument gemäß Anspruch 9, **dadurch gekennzeichnet, dass** das Sicherheitselement (70) senkrecht zum Chip (60) liegt, damit es diesen visuell und möglicherweise taktil maskiert.

11. Dokument gemäß einem der vorhergehenden Ansprüche, **dadurch gekennzeichnet, dass** die Befestigung der beiden Blätter (3, 4) aneinander durch Kleben, Laminierung oder Verschmelzung durchgeführt wird.

12. Dokument gemäß einem der vorhergehenden Ansprüche, **dadurch gekennzeichnet, dass** es ein zusätzliches ablösbares Blatt in Kontakt mit dem Kleber umfasst.
